Europäisches Patentamt

European Patent Office

Office européen des brevets

(11) Numéro de publication: **0 376 374**
**A1**

## (12) DEMANDE DE BREVET EUROPEEN

(21) Numéro de dépôt: 89203186.5

(51) Int. Cl.⁵: **G01S 13/34**

(22) Date de dépôt: 14.12.89

(30) Priorité: 20.12.88 FR 8816839

(43) Date de publication de la demande:
**04.07.90 Bulletin 90/27**

(84) Etats contractants désignés:
**DE FR GB IT**

(71) Demandeur: **TELECOMMUNICATIONS RADIOELECTRIQUES ET TELEPHONIQUES T.R.T.**
**88 rue Brillat Savarin**
**F-75640 Paris Cédex 13(FR)**
(84) **FR**

(71) Demandeur: **N.V. Philips' Gloeilampenfabrieken**
**Groenewoudseweg 1**
**NL-5621 BA Eindhoven(NL)**
(84) **DE GB IT**

(72) Inventeur: **Tomasi, Jean-Pierre Société Civile S.P.I.D.**
**209, rue de l'Université**
**F-75007 Paris(FR)**

(74) Mandataire: **Pyronnet, Jacques et al**
**Société Civile S.P.I.D. 209 rue de l'Université**
**F-75007 Paris(FR)**

(54) Radioaltimètre à élimination d'échos fixes et procédé de mise en oeuvre.

(57) Le radioaltimètre du type FM-CW émet une onde en dents de scie de fréquence et comporte une antenne émettrice (3) et une antenne réceptrice (4). Un signal de battement $Fb_t$ entre ondes émise et reçue est fourni en sortie d'un mélangeur (5).

Selon l'invention, le radioaltimètre comporte :
- des moyens de numérisation (13) de $Fb_t$ (S02) à raison de n échantillons par dent de scie ;
- une première mémoire (M1) pour stocker $n \times k$ échantillons $S_j^i$ (i allant de 1 à k et j de 1 à n) ;
- une deuxième mémoire (M2) pour stocker n sommes

$$\sum_{i=1}^{k} S_j^i \; ;$$

- des premiers moyens de calcul (PR) des

$$\frac{1}{k} \sum_{i=1}^{k} S_j^i ,$$

représentatifs de $Fb_f$, stockés dans une troisième mémoire (M3),
- et des moyens de calcul et de mémorisation supplémentaires (PR,M4) qui fournissent les différences $Fb_t$-$Fb_f$.
Application à la mesure d'altitudes basses.

EP 0 376 374 A1

FIG.2

## Radioaltimètre a élimination d'échos fixes et procédé de mise en oeuvre.

L'invention concerne un radioaltimètre à élimination d'échos fixes pour la mesure de basses altitudes comportant un générateur commandé par un modulateur pour fournir un signal modulé linéairement en fréquence sous la forme de dents de scie identiques séparées par des paliers, des moyens d'émission vers le sol d'une onde correspondant au signal dudit générateur, des moyens de réception de l'onde réfléchie, un mélangeur pour former un signal de battement $Fb_t$ représentatif du cumul des échos fixes et mobiles entre les signaux correspondant aux ondes émise et reçue.

Les radioaltimètres FM/CW dont la structure est décrite pour l'essentiel au paragraphe précédent sont bien connus dans la technique des appareils de mesure de distance en général, et plus particulièrement dans celle de la mesure de la hauteur (altitude) H qui sépare un aéronef dans lequel ils sont embarqués et le sol. Lorsque les dents de scie sont fixes, la fréquence fb du signal Fb constitue une mesure directe de la hauteur H recherchée selon la formule générale classique :

$$H = \frac{c}{2} \frac{T1}{\Delta F} \, fb \qquad\qquad (1)$$

avec :

c : vitesse d'une onde électromagnétique dans l'air,

T1 : durée de la dent de scie,

$\Delta F$ : excursion de fréquence des signaux émis (fréquence de wobulation).

La formule (1) s'obtient d'ailleurs par élimination de $\tau$ entre les relations

$$fb = \frac{\tau \, \Delta F}{T1} \qquad\qquad (2)$$

et $\tau = \frac{2H}{c}$  (3)

$\tau$ étant le temps de retard entre onde émise et onde reçue en écho.

Cette façon d'opérer qui confère au radioaltimètre une structure très simple se prête bien au traitement numérique du signal Fb échantillonné moyennant une transformation temporelle-fréquencielle comme une transformée de Fourier par exemple, étant donné que la fréquence fb caractéristique de l'écho de sol, que l'on cherche à isoler, est en général facilement reconnaissable dans le spectre obtenu pour le signal Fb.

Un problème fondamental demeure, cependant, qu'il s'agisse de la technique indiquée plus haut ou d'autres techniques incluant d'ailleurs le traitement analogique du signal : il s'agit de la mesure de très faibles hauteurs, typiquement inférieures à 6 m. Dans ce cas, les échos mobiles à savoir, dans le cas d'un radioaltimètre, l'écho de sol, et les échos fixes parasites fournissent des signaux de fréquences voisines, dans le signal de battement Fb, et d'amplitudes comparables. Les échos fixes sont essentiellement ceux qui sont engendrés par les superstructures de l'aéronef, en particulier le train d'atterrissage et ceux qui résultent d'interférences dues à l'oscillation locale dans le système d'antenne, soit le couplage parasite entre antennes dans le cas d'un radioaltimètre à deux antennes ou la réflexion parasite du signal d'émission sur le connecteur de l'antenne dans le cas d'un radioaltimètre à une seule antenne émettrice-réceptrice. A des altitudes dépassant 6 m, les fréquences des composantes du signal Fb qui résultent des échos mobiles et des échos fixes respectivement sont suffisamment disjointes pour que ces dernières puissent être éliminées par filtrage fréquentiel. Ce problème se complique du fait que la place est comptée sur le fuselage d'un aéronef, un avion d'armes ou un missile surtout, qu'il n'est pas possible de placer le système d'antennes de façon optimale à l'abri de toutes les superstructures et que l'on souhaite compacter au maximum le système d'antennes ; la meilleure solution pour assurer ce compactage consiste naturellement à utiliser une antenne émettrice-réceptrice unique, mais la réflexion parasite précitée sur l'antenne est alors forte au point de rendre presque impossible la mesure de très courtes distances, la partie utile du signal Fb étant quasiment noyée dans le signal parasite dû aux échos fixes, alors que par ailleurs le spectre du signal Fb est en partie dégradé à d'aussi courtes distances. Pour la structure de radioaltimètre à deux antennes à laquelle se limite l'invention il faut, dans l'art connu, maintenir un découplage de 70 dB soit une distance réciproque d'environ 50 cm entre antennes pour obtenir un rapport signal utile sur signal parasite dû aux échos fixes suffisamment élevé du signal de battement à des distances inférieures à 6 m.

La présente invention se propose d'appliquer le principe d'élimination d'échos fixes (Mobile Target Indicator ou MTI en langue anglaise) à un radioaltimètre du type FM/CW pour épurer le signal de battement $Fb_t$ à basse altitude. Un appareil de mesure de distance du type FM/CW qui utilise le principe du MTI est connu notamment du brevet européen publié sous le numéro 0 099 160. Il s'agit là cependant d'une application différente de celle de la présente invention et qui conduit à une solution différente puisque cet appareil est un radar destiné à la détection de plusieurs cibles mobiles, à des vitesses généralement élevées, les distances à mesurer étant elles aussi élevées, ce qui permet l'utilisation d'une seule antenne par ailleurs ; cet appareil doit résoudre le problème de l'effet Doppler dû aux cibles mobiles, problème qui ne se pose pas pour un radioaltimètre à basse altitude. Dans le système indicateur de cibles mobiles de ce brevet européen il est prévu, pour éliminer les échos, de faire la différence entre deux échos successifs, c'est-à-dire d'utiliser, comme signal de battement utile la différence entre les signaux de battement de deux dents de scie consécutives.

Un but de la présente invention est de réaliser un radioaltimètre FM/CW à deux antennes qui permette la mesure d'altitudes basses.

Un autre but de l'invention est de réaliser un radioaltimètre FM/CW à deux antennes dans lequel le découplage entre antennes inférieur à 50 dB et qui permette la mesure d'altitudes inférieures à 6 m.

Encore un autre but de l'invention est de réaliser un radioaltimètre FM/CW à deux antennes pour lequel les antennes sont en contact l'une avec l'autre et qui permette la mesure d'altitudes inférieures à 6 m.

Encore un autre but de l'invention est de pouvoir placer le système d'antennes à un endroit, sur le fuselage de l'aéronef, depuis lequel des superstructures de l'aéronef peuvent se trouver dans le diagramme de rayonnement du système d'antennes.

Ces buts sont atteints et les inconvénients de l'art antérieur sont atténués grâce au fait que le radioaltimètre indiqué au premier paragraphe est remarquable en ce qu'il comporte des moyens de numérisation, de stockage d'échantillons et de calcul constitués par :

- des moyens de numérisation pour échantillonner ledit signal $Fb_t$ pendant la durée des dents de scie, à des intervalles de temps fixes par rapport au début de chaque dent de scie, à raison de n échantillons par dent de scie ;

- une première mémoire pour stocker les $n \times k$ échantillons de k dents de scie successives :

$S_j^i$ , i variant de 1 à k et j de 1 à n ;

- une deuxième mémoire pour stocker n sommes, chaque somme étant le cumul de k échantillons de même numéro d'ordre correspondant à k dents de scie :

$$\sum_{i=1}^{i=k} S_1^i , \ldots, \sum_{i=1}^{i=k} S_n^i ;$$

- des premiers moyens de calcul pour calculer les n rapports représentatifs des échos fixes $Fb_f$ :

$$\frac{1}{k}\sum_{i=1}^{i=k} S_1^i , \ldots, \frac{1}{k}\sum_{i=1}^{i=k} S_n^i ;$$

- une troisième mémoire pour stocker lesdits n rapports :

$$\frac{1}{k}\sum_{i=1}^{i=k} S_j^i ;$$

- des moyens de calcul et de mémorisation supplémentaires pour calculer et fournir en sortie les différences $Fb_t - Fb_f$ représentatives des échos mobiles $Fb_m$.

Selon un mode de réalisation préféré de l'invention, les moyens de calcul et de mémorisation supplémentaires sont constitués par :

- des deuxièmes moyens de calcul pour calculer $n \times m$ différences ($m \leq k$) :

3

$$s_1^1 - \frac{1}{k} \sum_{i=1}^{i=k} s_1^i, \ldots, s_n^1 - \frac{1}{k} \sum_{i=1}^{i=k} s_n^i \ ;$$

$$s_1^2 - \frac{1}{k} \sum_{i=1}^{i=k} s_1^i, \ldots, s_n^2 - \frac{1}{k} \sum_{i=1}^{i=k} s_n^i \ ; \ \ldots \ ;$$

$$s_1^m - \frac{1}{k} \sum_{i=1}^{i=k} s_1^i, \ldots, s_n^m - \frac{1}{k} \sum_{i=1}^{i=k} s_n^i \ ;$$

- une quatrième mémoire pour stocker et fournir à sa sortie les $n \times m$ différences représentatives des échos mobiles $Fb_m$ pour k dents de scie successives.

L'idée qui sous-tend l'invention résulte de la remarque que, pour une valeur d'abscisse donnée de chaque dent de scie, c'est-à-dire pour un intervalle de temps prédéterminé après le début de chaque dent de scie, la composante représentative des échos fixes, dans le signal de battement, est toujours la même, en phase et en amplitude ; par contre, la composante due aux échos mobiles varie, pour une abscisse donnée, d'une dent de scie à la suivante de façon quasi aléatoire, et si l'on prend la valeur moyenne de cette composante sur un assez grand nombre de dents de scie, on peut constater que cette valeur moyenne tend vers zéro en première approximation.

La variation indiquée à la phrase précédente peut résulter d'une variation d'altitude qui introduit une variation lente de phase de la composante des échos mobiles d'une dent de scie à la suivante, et on notera à cet égard qu'une rotation de phase égale à $2\Pi$ au cours d'un certain nombre de dents de scie suffit pour que la valeur moyenne relative aux échos mobiles soit nulle en première approximation. Cependant, même à altitude constante, cette variation indiquée au paragraphe précédent, qui constitue alors un bruit ajouté à la composante utile que l'on souhaite mesurer, persiste, par un effet de scintillation des échos de sol ou en conséquence des irrégularités de niveau du sol, et s'annule toujours en moyenne.

De préférence, les moyens de stockage d'échantillons et de calcul sont constitués par un processeur et quatre mémoires RAM.

La description qui suit en regard des dessins annexés, le tout donné à titre d'exemple fera bien comprendre comment l'invention peut être réalisée.

La figure 1 est le schéma synoptique d'un radioaltimètre FM/CW à deux antennes muni d'un commutateur à deux positions pour aiguiller le signal de battement vers un organe d'élimination d'échos fixes destiné à la mesure d'altitudes basses selon l'invention.

La figure 2 représente un mode de réalisation de l'organe d'élimination d'échos fixes dans le signal de battement pour la mesure d'altitudes basses selon l'invention.

La figure 3 est un diagramme de temps de différents signaux engendrés par les circuits des figures 1 et 2.

La figure 4 représente un organe de mesure de la hauteur H à partir du signal de battement.

La figure 5 représente en coupe avec arrachement l'implantation des antennes sur l'aéronef qu'il est possible d'obtenir selon l'invention.

La figure 6 représente un mode de réalisation simplifié de l'invention.

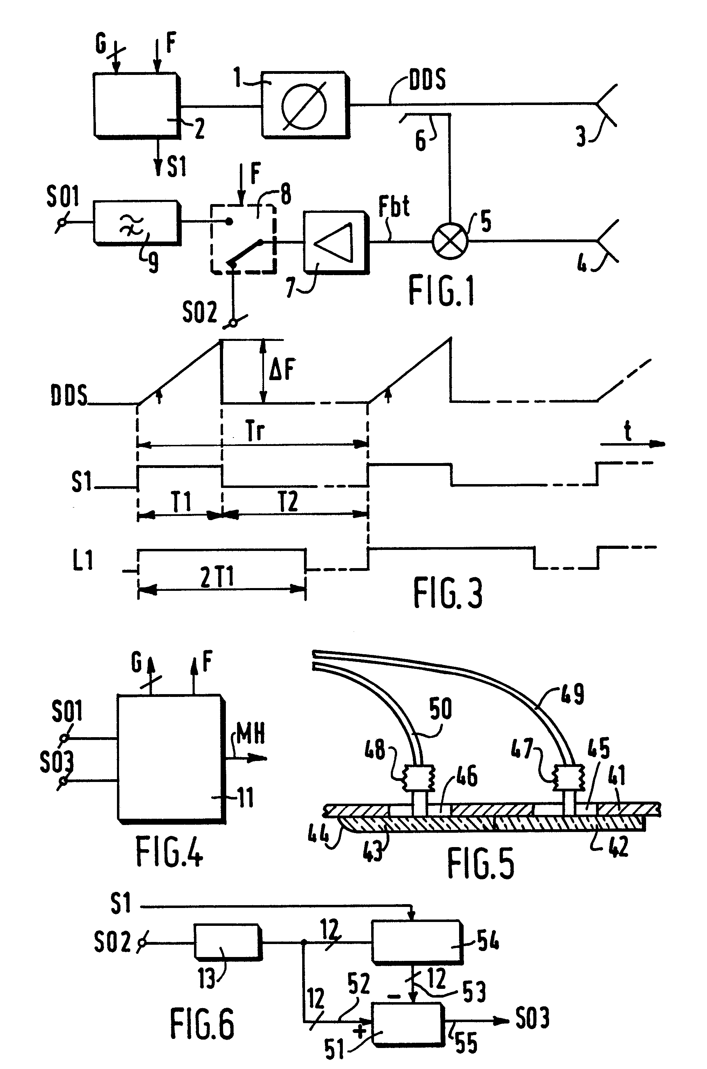

Le radioaltimètre de la figure 1 comporte un générateur 1 commandé par un modulateur 2 pour fournir à des moyens d'émission (antenne émettrice) 3 un signal modulé linéairement en fréquence sous la forme de dents de scie identiques séparées par des paliers. Le générateur 1 est de préférence un oscillateur commandé par tension et le signal DDS de la figure 3, de même forme que le signal de tension de sortie du modulateur 2, représente la variation de fréquence du signal de sortie à haute fréquence du générateur 1, par exemple sous la forme de dents de scie à pente positive, séparée par des paliers. La fréquence émise f est de l'ordre de quelques GHz et l'excursion de fréquence $\Delta F$, fixe, de l'ordre de quelques centaines de mégahertz. Le signal d'émission est transformé par les moyens d'émission constitués par l'antenne émettrice 3 dirigée vers le sol en une onde qui, après réflexion sur le sol, est captée par des moyens de réception constitués par l'antenne réceptrice 4, cette dernière captant aussi des échos dits échos fixes causés par des réflexions sur des superstructures voisines de l'aéronef, tel le train d'atterrissage par exemple, ou par une transmission directe de l'onde par couplage parasite de l'antennne 3 à l'antenne 4. L'ensemble des échos captés par l'antenne 4 est fourni à un mélangeur qui reçoit sur une deuxième entrée une partie du signal d'oscillation locale prélevée, par exemple au moyen d'un coupleur 6, sur la voie d'émission du radioaltimètre. Le mélangeur 5 fournit à sa sortie un signal de battement soustractif $Fb_t$ dont la fréquence fbt est représentative du cumul des échos fixes et mobiles précités. Le signal $Fb_t$ est amplifié par un amplificateur 7 puis fourni à un commutateur à deux positions 8.

Pour des altitudes dites élevées, c'est-à-dire supérieures à un seuil SE de l'ordre de 6 m, le commutateur 8 est, sous la commande d'un signal logique F dans la position inverse de celle représentée sur la figure 1 et le radioaltimètre fonctionne d'une façon classique connue. Par exemple le signal $Fb_t$ amplifié est transmis à un filtre passe haut 9, qui le débarrasse de ses composantes représentatives des échos fixes, puis à une borne de raccordement S01. A partir de la borne S01, le signal de battement ainsi épuré, sous forme analogique, est fourni à l'organe 11 de mesure de la hauteur H, représenté à la figure 4. Ce traitement peut être effectué de façon connue sous forme analogique ou numérique et l'organe 11 fournit à sa sortie une grandeur MH représentative de la hauteur H à mesurer. L'organe 11 fournit aussi au modulateur 2 deux signaux logiques G et F. Le signal G, codé sur plusieurs bits, permet de faire varier par pas la durée T1 de la dent de scie en fonction de la plage d'altitudes dans laquelle la hauteur H doit être mesurée. Le signal F qui peut prendre la valeur logique 0 ou 1 change d'état lors du passage du seuil SE marquant les altitudes basses et a pour effet, lorsque : H<SE, d'une part de positionner le commutateur 8 dans la position représentée sur la figure 1 (signal $Fb_t$ fourni à une borne de connexion S02), d'autre part d'imposer à chaque dent de scie du signal DDS une durée T1 constante. T2, fixe, est la durée du palier supérieure à T1 et Tr est la somme des deux précédentes ou période de répétition de la dent de scie.

A la figure 3 est aussi représenté un signal S1. Ce signal S1, fourni par le modulateur 2 est un signal logique qui prend la valeur "1" pendant la durée T1 et la valeur "0" pendant la durée T2 du palier.

A la figure 2 est représenté un organe d'élimination d'échos fixes selon l'invention constitué par des moyens de numérisation, de stockage d'échantillons et de calcul qui reçoit sur sa borne d'entrée S02 le signal de battement analogique $Fb_t$ amplifié et fournit sur sa borne de sortie S03, sous forme numérique, le signal $Fb_m$ qui est représentatif du signal $Fb_t$ débarrassé des échos fixes, c'est-à-dire représentatif des échos mobiles (essentiellement le signal dû à l'écho de sol).

Le circuit de la figure 2 comporte :
- un processeur PR, par exemple un microprocesseur de calcul, qui reçoit le signal S1 ;
- un convertisseur analogique-numérique (CAN) 13 ;
- une première mémoire RAM, M1 pour stocker dans k zones les échantillons prélevés par le CAN 13 pendant la durée D de k dents de scie consécutives, k étant un nombre de l'ordre de 100 à 300, de préférence égal à 128 ou 256, à raison de n échantillons par dent de scie, n étant par exemple égal à 15 ;
- une deuxième mémoire RAM, M2 pour stocker n sommes, chaque somme étant le cumul de k échantillons de même numéro d'ordre ;
- une troisième mémoire RAM, M3 pour stocker les sommes contenues dans M2 après division par k, ce qui fournit une très bonne approximation des échos fixes pendant la durée D ;
- une quatrième mémoire RAM, M4 qui stocke aux n emplacements de chaque zone parmi m zones (m≦k) les différences de valeur entre les n échantillons contenus dans chaque zone correspondante de M1 et les n échantillons contenus dans M3.

Avant de décrire plus en détail le mode de réalisation particulier de la figure 2 on expose ci-dessous le principe et l'algorithme de fonctionnement du MTI appliqué, selon l'invention, à un radioaltimètre FM/CW.

Pendant la durée d'observation D, comprenant k dents de scie (D de l'ordre de 0,1 s), le signal de battement est numérisé et mis en mémoire. Ceci fait, le processeur calcule un signal moyen. Pour cela, tous les points correspondants des k dents de scie sont additionnés (en tension) et la somme obtenue est divisée par k de telle façon que si le signal de battement s'est répété identiquement au cours des k dents de scie (cas de l'aéronef à l'arrêt), le signal moyen résultant de l'opération est un signal identique. Ensuite, pour chaque dent de scie, on soustrait du signal réel obtenu au cours de celle-ci le signal moyen obtenu sur la durée D. La différence est représentative des échos mobiles. Les ayant ainsi isolés sous forme numérique, on peut effectuer sur ces échos mobiles tous les calculs et traitements classiques qui permettent de calculer les distances correspondantes et qui sont décrits par ailleurs, ce que symbolise l'organe 11 de la figure 4. L'élimination des échos fixes n'est utile que lorsque l'altitude de l'aéronef est très faible, moins de 20 pieds par exemple. Au dessus de cette altitude, les échos fixes sont plus simplement éliminés par filtrage fréquentiel. Au sol, l'aéronef étant immobile, tous les échos sont fixes. Il n'est donc pas possible d'effectuer de mesure avec le MTI et le radioaltimètre doit en être informé, du fait de recevoir le signal F air/sol déjà disponible à bord ; sans quoi cette situation non opérationnelle pourrait être confondue par exemple avec celle obtenue lorsque l'aéronef vole sur le dos, ce qui donnerait lieu à une fausse alarme. Par le signal de commande F, le MTI est mis en service au décollage et s'arrête lorsque la hauteur dépasse 20 pieds. Ensuite, il est remis en route chaque fois que la hauteur redevient inférieure à 20 pieds.

L'algorithme de fonctionnement en MTS est le suivant :

Les dents de scie de modulation ont une durée fixe, par exemple : T1 = 60 μs. Elles sont séparées par des paliers de durée fixe, par exemple : T2 = 500 μs. Les dents de scie sont comptées à partir de la mise en service du MTI. A cet effet on utilise un premier compteur C1 qui peut être réalisé en logique

5

câblée ou en logiciel et qui doit pouvoir compter jusqu'à au moins 256. Le signal de battement est numérisé. La fréquence d'échantillonnage fs est par exemple égale à 250 kHz (soit un échantillon toutes les 4 $\mu$s). La numérisation se fait avec un convertisseur analogique-numérique de 12 bits ou de 8 bits. Avec les valeurs numériques indiquées ci-dessus il y a donc 15 échantillons par dent de scie (n = 15). Le début de chaque dent de scie est nécessairement synchronisé avec les impulsions de l'horloge de 250 kHz pour que les instants d'échantillonnage aient lieu toujours avec le même décalage par rapport au début de la dent de scie. Pendant la durée de chaque dent de scie les n échantillons sont comptés par un deuxième compteur C2, lui aussi réalisé sous forme matérielle ou logicielle. Le compteur C2 est remis à zéro avant le début de chaque nouvelle dent de scie. Dans la première mémoire RAM, M1, tous les échantillons sont stockés, sous la commande du processeur. Cette mémoire est donc divisée en 256 zones de 15 nombres chacune. Chaque zone contient les valeurs numériques des 15 échantillons de chaque dent de scie. Les adresses d'écriture sont fournies par les comtpeurs C1 et C2.

Selon une première variante préférée, lorsque M1 est pleine, on efface la zone correspondant à la plus ancienne dent de scie pour la réutiliser et ainsi de suite, à chaque dent de scie.

Dans la deuxième mémoire RAM, M2, le processeur enregistre, toujours à memsure qu ils arrivent, la somme de tous les échantillons de même numéro d'ordre, avec adressage par le compteur C2. Il y a donc, dans M2, quinze nombres numérotés de 1 à 15, dont chacun, codé sur 20 bits (ou 16 bits) est la somme de tous les échantillons de même numéro d'ordre des dents de scie successives, jusqu'à k dents de scie (k = 256 dans l'exemple).

Selon la première variante indiquée plus haut, lorsqu'on doit effacer l'enregistrement d'une dent de scie ancienne dans M1, on soustrait préalablement chacun de ses échantillons de chaque somme dans M2. A la fin de chaque dent de scie, pendant le temps mort T2 du palier qui précède la dent de scie suivante, le processeur lit la valeur de chacun des n nombres de M2, la divise par le nombre k de dents de scie enregistrées et fournit ainsi dans la mémoire M3 le signal moyen sur les k dents de scie. Ce signal moyen est retranché, échantillon par échantillon, d'un nombre m de dents de scie (m<k) les plus récentes dans la mémoire M1 et les résultats sont stockés dans la mémoire M4. m est par exemple égal à 100, pour limiter à une valeur raisonnable le volume des calculs à effectuer. Les échos fixes ayant été ainsi ôtés, l'organe de traitement 11, qui peut d'ailleurs mettre à contribution le processeur PR, applique au signal numérique mémorisé en M4 les critères de détection habituels décrits par ailleurs, puis, en cas de succès, calcule la hauteur H à partir de ces mêmes signaux. En cas d'échec, la même opération peut être effectuée sur les 200 dernières dents de scie, ou plus, ce qui augmente le volume des calculs, la capacité de la mémoire M4 et le travail de traitement du signal mais permet en revanche la mesure de la hauteur H qui s'avérait impossible ou trop imprécise à partir d'un nombre trop limité de dents de scie. Dans cette première variante de l'invention on fait l'hypothèse que le processeur est assez rapide pour effectuer les opérations décrites ci-dessus pendant la durée T2 de chaque palier, étant entendu que cette durée T2 peut être portée à plus de 500 $\mu$s si nécessaire. Ces opérations peuvent d'ailleurs être commencées au décollage, dès que 100 dents de scie ont été enregistrées.

Selon une deuxième variante simplifiée, l'effacement progressif des valeurs anciennes dans les mémoire M1 et M2 n'est plus nécessaire : dès que les mémoires M1 et M2 sont pleines leur contenu est figé, les échantillons du signal analogique $Fb_t$ n'étant alors plus pris en compte pendant tout le temps nécessaire aux calculs, au remplissage des mémoires M3 et M4 et à la détermination de la hauteur H. Dans ce cas, n'étant plus limité par la durée T2 du palier, il est préférable d'adopter, pour les paramètres k et m des valeurs assez élevées, par exemple : k = 256 et m = 200. A la fin d'un cycle de mesure de H qui dure entre 50 et 150 ms environ, le contenu des 4 mémoires M1 à M4 est effacé et un nouveau cycle de mesure de l'altitude H est entrepris. Le circuit de la figure 2 décrit ci-dessous permet, moyennant les adaptations nécessaires à la portée de l'informaticien moyen de mettre en oeuvre les deux variantes de l'invention que l'on vient de décrire.

Outre les éléments déjà décrits, le circuit de la figure 2 comporte un générateur d'horloge 14, de fréquence par exemple égale à 250 kHz relié à un circuit de synchronisation 15 qui reçoit par ailleurs le signal S1 et à une entrée d'un circuit-porte ET (porte ET) 16 dont la deuxième entrée reçoit un signal logique L1 en provenance du processeur PR. La sortie du circuit 15 commande le fonctionnement (S1 à "1") ou le non fonctionnement (S1 à "0") du CAN 13 de façon telle que les instants d'échantillonnage soient toujours les mêmes par rapport au début de chaque dent de scie. Sur la figure, les conducteurs multiples sont repérés par un trait oblique avec en regard, le nombre de conducteurs pris à titre d'exemple.

La porte ET 16 transmet les impulsions d'horloge à un compteur C2 (compteur par n) pendant l'état haut du signal L1 partiellement représenté à la figure 3. Pendant la durée T1, le compteur C2 adresse en écriture la mémoire M2, directement et chaque zone de la mémoire M1 par l'intermédiaire d'une porte ET 17 et d'une porte OU 18. L'adressage des zones (incrémentation d'une unité à chaque dent de scie) s'effectue directement à partir du processeur sur un conducteur d'adresses 19. Le signal de sortie du CAN 13 est fourni directement à la mémoire M1 et, par l'intermédiaire d'un additionneur 20, d'une porte ET 21 et d'une porte OU 22, à la mémoire M2. L'additionneur 20 reçoit sur une deuxième entrée des données en provenance de la mémoire M2. Pour l'inscription de la mémoire M1, les adresses de zone (n adresses) sont validées à travers les portes 17 et 18 par un signal logique L3 en provenance du processeur. Pour l'inscription de la mémoire M2, les données fournies par l'additionneur 20 sont validées à travers les portes 21 et 22 par un signal logique L2 en provenance du processeur. La lecture de la mémoire M2 s'effectue sur le bus de données 23 sous la commande du signal R2/W2. De façon analogue, la lecture de la mémoire M1 s'effectue sur le bus de données 24 sous la commande du signal R1/W1. Pour l'adressage en lecture de M1 tous les fils d'adresse proviennent du microprocesseur, le bus 19 servant toujours à l'adressage des zones (m zones) et l'adressage des points de chaque zone étant effectué sous la commande du signal $\overline{L3}$ (inverseur 25) à partir d'un bus 26 validé à travers une porte ET 27 et la porte OU 18. La mémoire M3 est reliée au processeur PR par un bus de données bidirectionnel 28, un bus d'adresses 29 et un fil de commande d'écriture-lecture R3/W3. La mémoire M4 est reliée au processeur par un bus de données 31, un bus d'adresses 32 et un fil de commande d'écriture-lecture R4/W4. Pour l'effacement des valeurs anciennes (première variante), il est prévu en outre un bus de données 33 qui est validé par un signal logique L4 à travers une porte ET 34 et la porte OU 22. Sur la figure 2, les différents bus d'adresses ont volontairement été représentés séparés pour mieux faire apparaître les fonctionnalités du schéma. L'informaticien sait traduire ce schéma sous une forme mieux adaptée au matériel informatique, notamment en utilisant des signaux logiques de sélection de circuit (CS) en association avec la mise en état de haute impédance de circuits non sélectionnés. On notera par ailleurs que les lignes qui portent les signaux L1, L2, L3, L4 peuvent appartenir au bus de données du processeur. On peut aussi ramener de 20 à 16 le nombre de fils de certains bus de données en codant les échantillons sur 8 bits au lieu de 12 bits.

Le circuit de la figure 2 fonctionne de la façon suivante :

Pour l'enregistrement des données, pendant chaque durée T1, le processeur reçoit le signal S1 (voir figure 3). Par la ligne qui porte le signal L1 aussi représenté à la figure 3 et la porte ET 16 les impulsions d'horloge émises en 14 sont transmises au compteur C2. Pour cela, le signal L1, calé sur le front montant de S1 est à "1" pendant la durée T1, soit pendant 16 coups d'horloge, et aussi pendant les 16 coups d'horloge suivants au début du palier (durée totale : 2T1). Le compteur C2 est ainsi incrémenté de 0 à 15 pendant la durée T1 de la dent de scie, passe à 0 à la fin de T1 puis décrit un nouveau cycle de 0 à 15 de façon à être à nouveau à 0 au début de la dent de scie suivante. Le compteur C2 fournit toujours les adresses à M2, en écriture ou en lecture. Pendant chaque durée T1, les sorties 36 de M2 reliées au bus 23, sont sur l'additionneur 20, qui reçoit d'autre part le signal de sortie du CAN 13 et qui fournit la somme de l'échantillon courant de $Fb_t$ et du contenu de M2 à l'adresse définie par C2 et qui correspond au numéro d'ordre de l'échantillon considéré dans la dent de scie. Par ailleurs, pendant la durée T1, le signal L2 est mis à "1" (et L4 à "0"), ce qui autorise le renvoi sur l'entrée de données de M2 de la somme effectuée par les portes 21 et 22. Les portes 21, 22 et 34 sont en réalité des ensembles de portes permettant le passage de tous les fils (en général 20 ou 16) qui portent les données sous forme parallèle. Les fils les plus significatifs du bus d'adresses de M1 (conducteur multiple 19) sont connectés directement au bus d'adresse du processeur. Ces fils d'adresse reçoivent le numéro d'ordre de la dent de scie, ce qui constitue une réalisation en logiciel du compteur C1. Par l'ensemble de portes ET 17 et 27, OU 18, l'inverseur 25 et le signal de commande L3, le processeur envoie sur les fils les moins significatifs soit les sorties de C2 soit les fils 26 de son propre bus d'adresse. Pendant la durée T1 de la dent de scie, le signal L1 est à "1" et M1 enregistre le signal d'entrée numérisé dans la zone définie par le processeur, la position de chaque échantillon dans la zone étant définie par le compteur C2. De cette façon sont enregistrés après k dents de scie consécutives :

- dans M1, k×n échantillons du signal d'entrée acheminés par un conducteur multiple 27, de la forme :
$S_j^i$, i variant de 1 à k, et j de 1 à n pour chaque valeur de k ;
- dans M2, n sommes d'échantillons, chaque somme étant le cumul de k échantillons de même numéro d'ordre correspondant à k dents de scie, soit :

$$\sum_{i=1}^{i=k} S_1^i, \ldots, \sum_{i=1}^{i=k} S_n^i ;$$

Lorsqu'il est décidé d'exploiter les enregistrements selon la première ou la deuxième variante, le processeur, qui a par ailleurs compté le nombre k de dents de scie, déclenche un cycle du compteur C2 (LI à "1" et R2/W2 en position lecture), lit les sorties de M2 et les divise par k. Le résultat est placé dans la mémoire M3 (R3/W3 en position écriture). La division par k peut être simplifiée du fait d'adopter pour k une valeur qui soit une puissance de 2, soit $2^q$, auquel cas la division par k consiste à supprimer les q bits les moins significatifs de chaque somme. La mémoire M3 contient alors les n valeurs :

$$\frac{1}{k} \sum_{i=1}^{i=k} s_j^i ,$$

j variant de 1 à n.

Le signal L3 est ensuite mis à "0" et R1/W1 en position lecture de façon que le processeur adresse entièrement en lecture la mémoire M1, tous les emplacements de M1 sont lus successivement et il leur est retranché, échantillon par échantillon, pour chaque zone, les valeurs correspondantes prises dans M3 (R3/W3 en position lecture), les n (15) valeurs de chaque zone de M1 correspondant chacune à une des n valeurs de M3. Le résultat de ces calculs est stocké à mesure dans la mémoire M4 (R4/W4 en position écriture) qui contient alors le signal débarrassé de ses échos fixes sous la forme :

$$s_1^1 - \frac{1}{k} \sum_{i=1}^{i=k} s_1^i , \ldots , s_n^1 - \frac{1}{k} \sum_{i=1}^{i=k} s_n^i ;$$

$$s_1^2 - \frac{1}{k} \sum_{i=1}^{i=k} s_1^i , \ldots , s_n^2 - \frac{1}{k} \sum_{i=1}^{i=k} s_n^i ; \ldots ;$$

$$\vdots$$

$$s_1^m - \frac{1}{k} \sum_{i=1}^{i=k} s_1^i , \ldots , s_n^m - \frac{1}{k} \sum_{i=1}^{i=k} s_n^i ;$$

$$\vdots$$

$$s_1^k - \frac{1}{k} \sum_{i=1}^{i=k} s_1^i , \ldots , s_n^k - \frac{1}{k} \sum_{i=1}^{i=k} s_n^i$$

On notera que la capacité de la mémoire M4 peut être choisie inférieure à k zones lorsque m zones correspondant à m dents de scie successives sont jugées suffisantes pour obtenir une mesure correcte de l'altitude H.

Pour la première variante de réalisation de l'invention il est nécessaire d'effacer, à chaque dent de scie, les données de la dent de scie la plus anciennne (k×Tr auparavant). Dans la mémoire M1, cet effacement peut se faire très simplement en adoptant un adressage cyclique, les nouvelles valeurs d'échantillons venant écraser les valeurs les plus anciennes. Pour l'effacement dans la mémoire M2, le processeur adresse en lecture la zone correspondante de M1 par son bus de données (signal L3 à "1"), provoque un cycle de C2 (signal L1 à "1" pendant 16 coups d'horloge) pour adresser toutes les cases de cette zone de M1 ainsi que simultanément toutes celles de M2 en lecture. Les n valeurs correspondantes de M1 sont soustraites de celles de 2 et le résultat de l'opération est renvoyé à M2 (R2/W2 en position lecture) par le bus 33 à travers les portes 34 et 22, le signal L2 étant à "0" et le signal L4 à "1".

Pour le traitement des échantillons contenus dans M4 (mesure de H) il suffit ensuite de lire cette dernière mémoire (R4/W4 en position lecture), ce qui a pour effet de transférer ces échantillons sur la borne de sortie S03. La mesure de l'altitude H, dans l'organe 11, peut être effectuée de plusieurs façons, classiques. Une transformation temporelle-fréquencielle sur les échantillons de M4 telle qu'une Transformée de Fourier Rapide (TFR) par exemple, procure le spectre du signal épuré $Fb_m$, qui est un spectre de raies espacées de la fréquence 1/Tr. Dans ce spectre, la raie de plus grande amplitude est représentative de l'écho de sol, ce qui permet de l'identifier, et sa fréquence fournit l'altitude H à partir de la formule (1) ci-dessus. Une autre façon de déterminer avec précision la fréquence précise de l'écho de sol consiste à mesurer au moyen d'un compteur (non représenté) le temps (la période) qui s'écoule entre deux passages par 0 orienté de la quasi-sinusoïde représentée par les échantillons contenus dans M4 (signal $Fb_m$). Cette période peut être obtenue avec une précision suffisante en effectuant une moyenne sur un assez grand nombre de périodes de la sinusoïde fondamentale du signal $Fb_m$, par exemple 100 à 300 périodes.

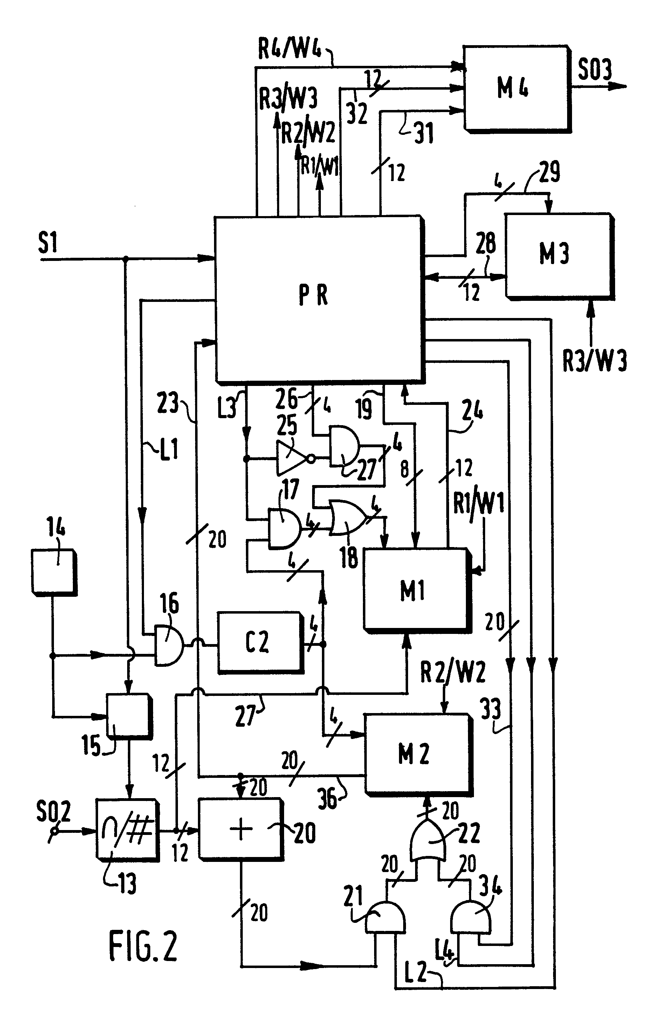

Le gain obtenu en rapport signal à bruit pour l'écho de sol au moyen de l'organe d'élimination d'échos fixes de la figure 2 est de l'ordre de 20 à 30 dB. Ce gain est suffisant pour permettre un rapprochement des antennes d'émission et de réception jusqu'à ce que ces dernières soient au contact l'une de l'autre, sur le fuselage de l'aéronef, comme représenté à la figure 5. En effet, dans l'art connu, pour pouvoir mesurer des altitudes inférieures à 6 m, il est nécessaire de prévoir un découplage entre antennes de 70 dB ce qui impose pratiquement un écartement de l'ordre de 50 cm entre antennes. Ceci oblige à prévoir deux implantations soit deux fixations séparées, résultant en deux bords d'attaque différents des antennes au vent, générateurs de freinage, et en des passages différents des câbles d'antenne à l'intérieur du fuselage. Par contre, selon l'invention, il est possible de mettre les antennes en contact, le découplage étant alors de 50 dB auxquels on peut rajouter les 20 dB précités pour assurer un rapport signal à bruit équivalent à celui obtenu selon l'art antérieur connu. Sur la figure 5 on a représenté en 41 le fuselage de l'aéronef. Les antennes émettrice 42 et réceptrice 43 sont élaborées sur une plaque rectangulaire de circuit imprimé unique, de 15 cm sur 10 cm environ, le bord d'attaque de l'antenne 43 est arrondi pour diminuer la prise au vent. Deux orifices voisins 45 et 46 dans le fuselage permettent le passage vers les antennes des connecteurs respectifs 47 et 48 auxquels sont raccordés les câbles coaxiaux d'alimentation 49 et 50.

La figure 6 représente un mode de réalisation simplifié de l'invention pour lequel le nombre m est choisi égal à 1, c'est-à-dire pour lequel, à chaque nouvelle dent de scie est soustrait, du signal S02, le signal représentatif des échos fixes qui a été calculé par le système de la figure 2. Cette soustraction est effectuée simplement, au moyen d'un soustracteur 51 dont l'entrée additive 52 est reliée à la sortie du CAN 13 et l'entrée soustractive 53 est reliée à l'organe de calcul du signal dû aux échos fixes 54, qui comporte les éléments C2, M1, M2, M3 et PR plus précisément au bus de données 28 de la mémoire M3 (non représenté). La sortie 55 du soustracteur 51 est reliée à la borne S03 (organe 11 de la figure 4) sur laquelle elle fournit, pour chaque dent de scie, n différences :

$$s_j^1 - \frac{1}{k} \sum_{i=1}^{i=k} s_j^i,$$

j variant de 1 à n.

On notera que, pour ce mode de réalisation simplifié, la soustraction entre le signal d'écho et l'écho fixe peut être effectué en analogique (de façon non représentée). Pour cela il faut disposer d'un soustracteur analogique dont l'entrée additive est reliée à la borne S02, l'entrée soustractive à la sortie d'un convertisseur numérique-analogique qui reçoit le bus 28 de la mémoire M3 (figure 2), et dont la sortie est reliée à la borne S01 de l'organe 11 (figure 4).

On notera enfin que l'invention ne se limite pas à des radioaltimètres pour lesquels la dent de scie a une durée fixe. Pour des radioaltimètres à durée de dent de scie T1 variable, l'échantillonnage peut se faire non pas à intervalles de temps fixes, déterminés par une horloge, mais lors du passage de la dent de scie par des seuils prédéterminés en ordonnée. Dans ce mode de réalisation non représenté, le signal DDS (figures 1 et 2) est fourni à un deuxième convertisseur analogique-numérique (CAN 2) dont la sortie change de valeur à chaque passage par un nouveau seuil et varie ainsi de 0 à n. La sortie de ce CAN 2 fournit alors directement l'adresse des mémoires M1 et M2, assurant donc aussi la fonction du compteur C2 (figure 2).

## Revendications

1. Radioaltimètre à élimination d'échos fixes pour la mesure de basses altitudes comportant un générateur commandé par un modulateur pour fournir un signal modulé linéairement en fréquence sous la forme de dents de scie identiques séparées par des paliers, des moyens d'émission vers le sol d'une onde correspondant au signal dudit générateur, des moyens de réception de l'onde réfléchie, un mélangeur pour former un signal de battement $Fb_t$ représentatif du cumul des échos fixes et mobiles entre les signaux correspondant aux ondes émise et reçue caractérisé en ce qu'il comporte des moyens de numérisation, de stockage d'échantillons et de calcul constitués par :
- des moyens de numérisation pour échantillonner ledit signal $Fb_t$ pendant la durée des dents de scie, à des intervalles de temps fixes par rapport au début de chaque dent de scie, à raison de n échantillons par dent de scie ;
- une première mémoire pour stocker les n×k échantillons de k dents de scie successives :
$S_j^i$, i variant de 1 à k et j de 1 à n ;
- une deuxième mémoire pour stocker n sommes, chaque somme étant le cumul de k échantillons de

9

même numéro d'ordre correspondant à k dents de scie :

$$\sum_{i=1}^{i=k} s_1^i, \ldots, \sum_{i=1}^{i=k} s_n^i \; ;$$

- des premiers moyens de calcul pour calculer les n rapports représentatifs des échos fixes $Fb_f$ :

$$\frac{1}{k} \sum_{i=1}^{i=k} s_1^i, \ldots, \frac{1}{k} \sum_{i=1}^{i=k} s_n^i \; ;$$

- une troisième mémoire pour stocker lesdits n rapports :

$$\frac{1}{k} \sum_{i=1}^{i=k} s_j^i \; ;$$

- des moyens de calcul et de mémorisation supplémentaires pour calculer et fournir en sortie les différences $Fb_t$-$Fb_f$ représentatives des échos mobiles $Fb_m$.

2. Radioaltimètre à élimination d'échos fixes pour la mesure de basses altitudes selon la revendication 1, caractérisé en ce que lesdits moyens de calcul et de mémorisation supplémentaires sont constitués par :
- des deuxièmes moyens de calcul pour calculer n×m différences (m≤k) :

$$s_1^1 - \frac{1}{k} \sum_{i=1}^{i=k} s_1^i, \ldots, s_n^1 - \frac{1}{k} \sum_{i=1}^{i=k} s_n^i \; ;$$

$$s_1^2 - \frac{1}{k} \sum_{i=1}^{i=k} s_1^i, \ldots, s_n^2 - \frac{1}{k} \sum_{i=1}^{i=k} s_n^i \; ; \; \ldots \; ;$$

$$s_1^m - \frac{1}{k} \sum_{i=1}^{i=k} s_1^i, \ldots, s_n^m - \frac{1}{k} \sum_{i=1}^{i=k} s_n^i \; ;$$

- une quatrième mémoire pour stocker et fournir à sa sortie les n×m différences représentatives des échos mobiles $Fb_m$ pour m dents de scie successives.

3. Radioaltimètre pour la mesure de basses altitudes selon la revendication 1 ou 2, caractérisé en ce que lesdits moyens de numérisation sont constitués par un convertisseur analogique-numérique qui reçoit le signal d'un générateur d'horloge et muni de moyens de synchronisation pour synchroniser les instants d'échantillonnage par rapport à l'instant qui marque le début de chaque dent de scie.

4. Radioaltimètre pour la mesure de basses altitudes selon l'une des revendications 1 à 3, caractérisé en ce que lesdits moyens de stockage d'échantillons et de calcul sont constitués par un processeur PR et quatre mémoires RAM, M1, M2, M3, M4.

5. Radioaltimètre pour la mesure de basses altitudes selon les revendications 3 et 4 prises ensemble, caractérisé en ce qu'il comporte en outre un compteur cyclique de capacité n commandé à partir dudit générateur d'horloge, pour l'adressage en écriture de ladite première mémoire M1 et l'adressage en écriture et en lecture de ladite deuxième mémoire M2.

6. Radioaltimètre pour la mesure de basses altitudes selon l'une des revendications 1 à 5, caractérisé en ce qu'il comporte des moyens pour effacer, à chaque période de dent de scie, dans lesdites première et deuxième mémoires, l'information relative à la dent de scie la plus ancienne.

7. Procédé d'élimination d'échos fixes pour la mise en oeuvre d'un radioaltimètre du type à onde continue modulée en fréquence selon la revendication 6, caractérisé en ce que les opérations de stockage d'échantillons et de calcul sont effectuées, par lesdits moyens de stockage d'échantillon et de calcul, pendant chaque durée de palier qui sépare deux dents de scie consécutives.

8. Procédé d'élimination d'échos fixes pour la mise en oeuvre d'un radioaltimètre du type à onde continue modulée en fréquence selon l'une des revendications 1 à 5, caractérisé en ce que les opérations de stockage d'échantillons et de calcul sont effectuées, par lesdits moyens de stockage d'échantillons et de calcul, lorsque lesdites première et deuxième mémoires sont pleines, après quoi les première et deuxième mémoires sont effacées et un nouveau cycle de mesure de l'altitude est entrepris.

9. Radioaltimètre pour la mesure de basses altitudes selon la revendication 1, caractérisé en ce que lesdits moyens de calcul et de mémorisation supplémentaires sont constitués par un soustracteur, pour calculer à chaque dent de scie, n différences :

$$s_j^1 - \frac{1}{l} \sum_{i=1}^{i=k} s_1^i, \ldots, s_n^1 - \frac{1}{k} \sum_{i=1}^{i=k} s_n^i$$

et pour fournir à sa sortie les n différences représentatives des échos mobiles $Fb_m$ pour chaque dent de scie, ledit soustracteur étant relié par son entrée additive à la sortie desdits moyens de numérisation et par son entrée soustractive au bus de données de sortie de ladite troisième mémoire.

**FIG.1**

**FIG.3**

**FIG.4**

**FIG.5**

**FIG.6**

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 251 387 (T.R.T.)<br>* En entier * | 1 | G 01 S 13/34 |
| A | | 7 | |
| | ---- | | |
| Y | US-A-3 967 283 (CLARK et al.)<br>* Résumé; figures 7,4,5,6,8,9; colonne 2, ligne 56 - colonne 3, ligne 22; colonne 10, ligne 61 - colonne 16, ligne 38 * | 1 | |
| A | | 2-6,9 | |
| | ---- | | |
| A | PATENT ABSTRACTS OF JAPAN, vol. 6, no. 51 (P-108)[929], 6 avril 1982, page 108; & JP-A-56 164 971 (HONDA GIKEN KOGYO K.K.) 18-12-1981<br>* Résumé; figures * | 1 | |
| | ---- | | |
| A | US-A-4 743 910 (HILL et al.)<br>* Résumé; figures 1-5 * | 1 | |
| | ---- | | |
| D,A | EP-A-0 099 160 (PHILIPS)<br>* Résumé; figure 1 * | 1 | **DOMAINES TECHNIQUES RECHERCHES (Int. Cl.5)** |
| | ---- | | |
| A | EP-A-0 270 148 (T.R.T.)<br>* Résumé; figures 1,2 * | 1 | G 01 S |
| | ---- | | |
| A | US-A-4 739 331 (PINCOFFS et al.)<br>* En entier * | 1 | |
| | ---- | | |
| P,X | EP-A-0 312 180 (T.R.T.)<br>* En entier * | 1 | |
| | ----- | | |

Le présent rapport a été établi pour toutes les revendications

| Lieu de la recherche | Date d'achèvement de la recherche | Examinateur |
|---|---|---|
| LA HAYE | 26-03-1990 | BLONDEL F.J.M.L.J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    ........................................................
& : membre de la même famille, document correspondant

EPO FORM 1503 03.82 (P0402)